# EUROPEAN PATENT SPECIFICATION

(11) **EP 2 863 385 B1**
(45) Date of publication and mention of the grant of the patent: **06.03.2019**
(21) Application number: 13806936.4
(22) Date of filing: 28.05.2013
(51) Int. Cl.: G10L 15/10, G10L 15/00, G10L 15/22

(54) **FUNCTION EXECUTION INSTRUCTION SYSTEM, FUNCTION EXECUTION INSTRUCTION METHOD, AND FUNCTION EXECUTION INSTRUCTION PROGRAM**
FUNKTIONSAUSFÜHRUNGSBEFEHLSSYSTEM, FUNKTIONSAUSFÜHRUNGSBEFEHLVERFAHREN UND FUNKTION AUSFÜHRUNGSBEFEHLSPROGRAMM
SYSTÈME D'INSTRUCTION D'EXÉCUTION DE FONCTION, PROCÉDÉ D'INSTRUCTION D'EXÉCUTION DE FONCTION ET PROGRAMME D'INSTRUCTION D'EXÉCUTION DE FONCTION

(30) Priority: 19.06.2012 JP 2012137842
(43) Date of publication of application: 22.04.2015
(73) Proprietor: NTT Docomo, Inc., Tokyo 100-6150 (JP)
(72) Inventor: TSUJINO Kosuke, Tokyo 100-6150 (JP)
(74) Representative: Viering, Jentschura & Partner mbB Patent- und Rechtsanwälte
(86) International application number: PCT/JP2013/064766
(87) International publication number: WO 2013/190956

(56) References cited:
- JP-A- 2001 034 289
- JP-A- 2002 169 584
- JP-A- 2006 023 444
- JP-A- 2006 137 366
- JP-A- 2006 137 366
- US-A1- 2007 174 057
- US-A1- 2007 203 699

## Description

### Technical Field

The present invention relates to a function-execution instruction system, a function-execution instruction method, and a function-execution instruction program that can issue an instruction of the execution of one or more functions.

### Background Art

Conventionally, systems have been known that recognize voices of users to execute functions on the basis of the recognized voices. For example, Patent Literature 1 describes execution of functions with which to set a registered location as a destination and to read a map for the registered location, for example, based on a voice recognized in a car navigation device.

### Citation List

### Patent Literature

[Patent Literature 1] Japanese Patent Application Laid-Open Publication No. 2006-23444

US 2007/203699 A1 describes a speech recognizer control system, a speech recognizer control method, and a speech recognizer control program for identification of a device on the basis of a speech utterance of a user and to control the identified device. The speech recognizer control system includes a speech input unit to which a speech utterance is input from a user, a speech recognizer that recognizes the content of the input speech utterance. A device controller identifies a device to be controlled among a plurality of devices based on at least the recognized speech utterance content and which controls an operation of the identified device. A state change storage stores a first auxiliary information for identifying a device to be controlled, a state change other than at least a state change caused by a speech utterance from the user among the state changes of operations in the individual devices of the plurality of devices. The device controller carries out first device identification processing for identifying the device to be controlled on the basis of the recognized speech utterance content, and if the device cannot be identified by the first device identification processing, then the device controller uses at least the first auxiliary information to identify the device.

US 2007/174057 A1 describes a system to allow a user to obtain information about television programming and to make selections of programming using conversational speech. The system includes a speech recognizer that recognizes spoken requests for television programming information. A speech synthesizer generates spoken responses to the spoken requests for television programming information. A user may use a voice user interface as well as a graphical user interface to interact with the system to facilitate the selection of programming choices.

JP 2006 137366 A describes an instrument control device for a vehicle having a sound/voice recognition means for recognizing the sound/voice inputted from a microphone and converting it to a text. An ambiguousness determination means determines that the converted/produced text is clear or ambiguous in order to select the instrument becoming an operation object. A relevancy determination means investigates the relevancy of the text and the past operation with reference to an operation history memorizing part. The operation performed at the past are recorded and presuming the instrument becoming the operation object from a plurality of the instruments, a priority setting means sets the priority in every instrument. An operation instruction means performs the operation corresponding to the text by selecting the instrument based on the comparison result of the priority setting means and an operation circumstance presumption means for detecting or presuming the operation circumstance relating to the vehicle.

### Summary of Invention

### Technical Problem

A voice agent system is examined herein that can execute a plurality of functions (tasks) and also to which a user can make utterance instructions (instructions by voice) over a plurality of times. Such conventional systems cannot determine whether an uttered content is an utterance for addition of a condition or change in a previous task, or whether the uttered content is an utterance for a new request that is not related to the previous task.

For example, when a user utters "Tokyo Made No Norikae (Connections to Tokyo)" to the system, the system searches for connections from a station nearest from the user to Tokyo Station (starts up an application of connection guidance). It is assumed that the user then utters "Yappari Yokohama (I've changed my mind, Yokohama)" because the user wants to know connections to Yokohama Station rather than connections to Tokyo Station. In this case, if a task that is newly executed based on the content uttered by the user is determined, because the utterance "Yappari Yokohama (I've changed my mind, Yokohama)" does not contain a keyword "Norikae (connection)" for executing a task of searching for connections, a task of searching for a map of Yokohama that is activated based only on the name of the place, for example, will be executed instead of the task of searching for connections.

In contrast, if a task of searching for connections that is a previous task is taken over, connections to Yokohama Station can be searched as the user wants. However, assuming that tasks are taken over in such a uniform manner, after uttering "Tokyo Made No Norikae (Connections to Tokyo)" even if the user wants to search for restaurants of curry instead of connections and utters "Curry", the task of searching for connections will be executed again. In the case that tasks are executed simply based on words that are input as described above, an appropriate task cannot be executed based on words that are consecutively input.

The present invention has been made in view of the above-described problems, and an object thereof is to provide a function-execution instruction system, a function-execution instruction method, and a function-execution instruction program that can appropriately execute functions based on words that are consecutively input.

### Solution to Problem

To achieve the above-described object, a function-execution instruction system according to claim 1 is disclosed.

In the function-execution instruction system according to this embodiment of the present invention, based on the category related to the function and the category of the input word, whether to issue an instruction of the execution of the function the execution of which was previously instructed from now is determined. This appropriately determines, for example, whether to subsequently execute the function that was previously executed, or whether to execute a new function. In other words, the function-execution instruction system according to the embodiment of the present invention can appropriately execute functions based on words that are consecutively input.

The function-execution instruction system may further include executed-function storage means for storing therein a function the execution of which was instructed by the function-execution instruction means. The executed-function determination means, based on the category identified by the category identifying means and a category related to a function the execution of which was previously instructed by the function-execution instruction means, the function being stored in the executed-function storage means, may determine whether to issue an instruction of the execution of the function the execution of which was previously instructed by the function-execution instruction means from now.

A preset word may be associated with at least any of the one or more functions. The executed-function determination means may determine a function the execution of which is instructed by the function-execution instruction means among the one or more functions, based also on a word input by the word input means and the preset word. With this configuration, functions can be appropriately executed based on words that are closely related to the functions.

The executed-function determination means, based on a category identified by the category identifying means, may determine whether to issue an instruction of the execution of the function the execution of which was instructed by the function-execution instruction means immediately before a word that falls under the category is input by the word input means. With this configuration, for example, whether to consecutively execute the function that was most recently executed, or whether to execute a new function is appropriately determined, whereby functions can be appropriately executed based on the words consecutively input.

The function the execution of which is instructed by the function-execution instruction means may include a function of inputting a word, the word being contained in information input by the word input means and also fall under the category related to the function. The executed-function determination means may determine whether the word the category of which is identified by the category identifying means is capable of being input to a function the execution of which was previously instructed by the function-execution instruction means and, based on this determination, may determine whether to issue an instruction of the execution of the function the execution of which was previously instructed by the function-execution instruction means. With this configuration, in combination with the execution of a function, the input word can be used as an input to the function, and thus convenience of a user can be improved. For example, in combination with the execution of the above-described function of connection guidance, guidance can be provided based on a station name that is input. Furthermore, whether to execute the function that was previously executed can be more appropriately determined, whereby the embodiment of the present invention can be more appropriately implemented.

The executed-function determination means, when determining to issue an instruction of the execution of the function the execution of which was previously instructed by the function-execution instruction means from now, may use a word that was used as an input to the function the execution of which was previously instructed by the function-execution instruction means as an input to the function. With this configuration, the word that was used as an input to the function that is previously executed can be used as an input to a function that is newly executed, whereby convenience of the user can be further improved. For example, in the above-described function of connection guidance, guidance with only the arrival station changed can be provided.

The executed-function determination means may determine whether the category identified by the category identifying means is the same as the category of the word that was used as an input to the function the execution of which was previously instructed and, when determining that the categories are the same, may determine to issue an instruction of the execution of the function from now. With this configuration, the embodiment of the present invention can be further appropriately implemented.

The function-execution instruction system may further include a voice recognition means that receives a voice and performs voice recognition on the voice thus received, and inputs a result of the voice recognition thus performed to the word input means. With this configuration, functions can be executed by user's voices.

The present invention can be described as an invention of the function-execution instruction system as describe above, and additionally can be described as inventions of a function-execution instruction method and a function-execution instruction program as described below. These are substantially the same inventions and similar actions and effects are exhibited while categories, for example, are merely different therebetween.

Specifically, a function-execution instruction method according to claim 9 is disclosed.

A function-execution instruction program according to claim 10 is disclosed.

### Advantageous Effects of Invention

In one embodiment of the present invention, based on a category related to (associated with) a function and a category of an input word, whether to issue an instruction of the function the execution of which was previously instructed from now is determined. This appropriately determines, for example, whether to subsequently execute the function that was previously executed, or whether to execute a new function. In other words, according to the embodiment of the present invention, execution of functions based on words that are consecutively input can be appropriately performed.

### Brief Description of Drawings

Fig. 1 is a diagram illustrating a configuration of a function-execution instruction system according to an embodiment of the present invention.
Fig. 2 is a diagram illustrating a correspondence relation between tasks executed in the function-execution instruction system and slots.
Fig. 3 is a table illustrating information for identifying a category from a word.
Fig. 4 is a table illustrating scores for each task when a user utters "Tokyo Made No Norikae (Connections to Tokyo)".
Fig. 5 is a table illustrating scores for each task when the user utters "Yappari Yokohama (I've changed my mind, Yokohama)".
Fig. 6 is a table illustrating scores for each task when the user utters "Curry".
Fig. 7 is a diagram illustrating a hardware configuration of a function-execution instruction server and a voice recognition server constituting the function-execution instruction system according to the embodiment of the present invention.
Fig. 8 is a flowchart illustrating processes (function-execution instruction method) executed in the function-execution instruction system according to an embodiment of the present invention.
Fig. 9 is a diagram illustrating a configuration of a function-execution instruction program according to an embodiment of the present invention with a recording medium.

### Description of Embodiments

Embodiments of a function-execution instruction system, a function-execution instruction method, and a function-execution instruction program according to the present invention will be described in detail hereinafter with reference to the drawings. In the drawings, like reference signs are given to like elements, and duplicated explanations are omitted.

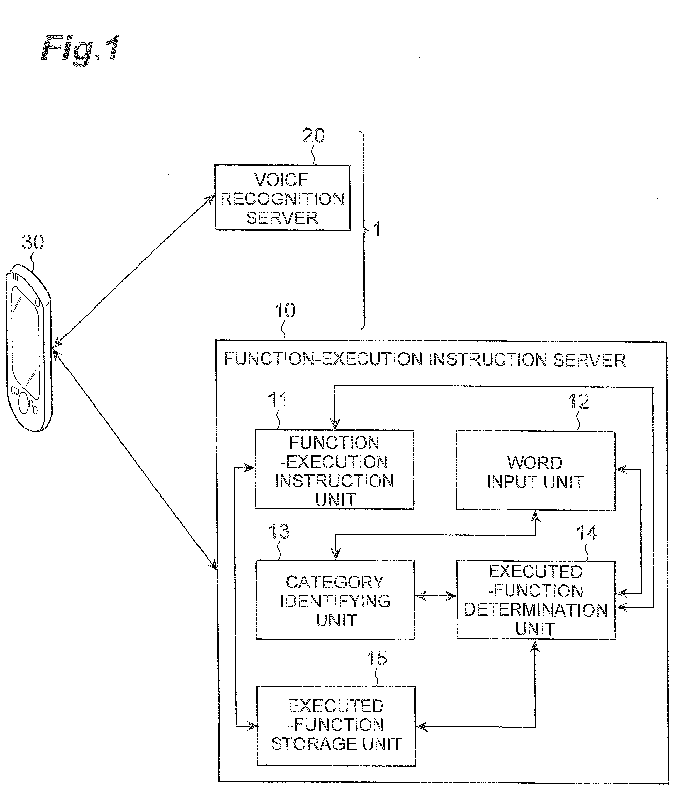

Fig. 1 illustrates a function-execution instruction system 1 according to a present embodiment. The function-execution instruction system 1 includes a function-execution instruction server 10 and a voice recognition server 20. The function-execution instruction system 1 is a system that instructs a communication terminal 30 to execute one or more preset functions. Examples of the functions that the function-execution instruction system 1 instructs the communication terminal 30 to execute include connection guidance, restaurant search, image search, music search, a music player, a scheduler, email, memo pad, route guidance, and map search. In the present embodiment, such executed functions are referred to as tasks. Specifically, for connection guidance, restaurant search, image search, music search, and map search, information on guidance and search results, for example, is displayed on the communication terminal 30.

The communication terminal 30 is a device that can communicate with the function-execution instruction server 10 and the voice recognition server 20 via a communication network (e.g., mobile communication network), and examples thereof include a mobile phone and a personal computer (PC). Because the above-described tasks are executed in response to user's voices as triggers, the communication terminal 30 has a function of receiving a voice of a user. The communication terminal 30 also has functions of receiving instructions from the function-execution instruction system 1 to execute the tasks, such as an information receiving function, an information processing function, and a display function.

In other words, the communication terminal 30 has function execution means for executing one or more (or a plurality of) tasks. Specifically, the communication terminal 30 stores application programs corresponding to the tasks in advance, and executes the tasks by executing (starting up) the stored application programs. The tasks executed by the communication terminal 30 are instructed by the function-execution instruction server 10 as described later. Execution of the tasks may be performed by acquiring information corresponding to the tasks via a network instead of executing the applications.

The function-execution instruction system 1 instructs the communication terminal 30 to execute the task in the following manner. To begin with, the communication terminal 30 inputs a voice of the user. The input voice is transmitted from the communication terminal 30 to the voice recognition server 20. The voice recognition server 20 receives the voice from the communication terminal 30 and performs voice recognition on the received voice. The voice recognition server 20 transmits a sentence or a group of words that is a result of the voice recognition to the communication terminal 30. The communication terminal 30 receives the result of the voice recognition and further transmits the result to the function-execution instruction server 10. The function-execution instruction server 10 receives the result of the voice recognition, determines a task to be executed based on the result of the voice recognition, and instructs the communication terminal 30 to execute the task. For example, the function-execution instruction server 10 transmits information indicating the task to be executed to the communication terminal 30. The communication terminal 30 receives this instruction from the function-execution instruction server 10 and executes the task corresponding to the instruction. Alternatively, the sentence or the group of words that is the result of the voice recognition may be directly transmitted from the voice recognition server 20 to the function-execution instruction server 10 without once being transmitted to the communication terminal 30. Furthermore, the function-execution instruction server 10 and the voice recognition server 20 may be integrated.

For example, when the user of the communication terminal 30 utters "Tokyo Made No Norikae (Connections to Tokyo)", in the function-execution instruction server 10, a task of connection guidance from a station nearest from the current location of the communication terminal 30 to Tokyo Station is determined to be executed, and the communication terminal 30 is instructed to execute the task of connection guidance. When the task of connection guidance is executed as described above, the current location of the communication terminal 30 is acquired in executing the task. In this manner, additional information is acquired depending on tasks if necessary. The foregoing is a general description of the function-execution instruction system 1 according to the present embodiment.

The following describes a function of the function-execution instruction system 1 according to the present embodiment. The voice recognition server 20 is a device that is voice recognition means for receiving a voice, performing voice recognition on the received voice, and outputting a result of performing the voice recognition. Specifically, the voice recognition server 20 receives voice data from the communication terminal 30 as described above. The voice recognition server 20 has a voice recognition engine, and performs voice recognition using the voice recognition engine. For the voice recognition, any conventional voice recognition methods can be used. The voice recognition server 20 acquires the result of the voice recognition as a group of words (word group including one or more words) or a sentence, and transmits the result to the communication terminal 30.

As depicted in Fig. 1, the function-execution instruction server 10 includes a function-execution instruction unit 11, a word input unit 12, a category identifying unit 13, an executed-function determination unit 14, and an executed-function storage unit 15.

The function-execution instruction unit 11 is function-execution instruction means for issuing an instruction of execution of one or a plurality of tasks to the communication terminal 30. Specifically, the function-execution instruction unit 11 instructs the tasks to be executed by transmitting commands to execute the tasks to the communication terminal 30. A task the execution of which is instructed by the function-execution instruction unit 11 is determined by the executed-function determination unit 14 as described later.

The tasks are related to (associated with) preset categories for the respective tasks. The categories are, for example, groups into which words are categorized by each attribute. Examples of the categories include "station", "commercial facility name", "overseas travel", and "cuisine name". For example, a task for connection guidance is related to (associated with) the category of "station", and a task for restaurant search is related to (associated with) the category of "cuisine name". The tasks may be associated with preset words. For example, the task for connection guidance is associated with the word "Norikae (connection)". For example, these associations are input and stored in the function-execution instruction server 10 in advance by an operator, for example, of the function-execution instruction system 1. These relations and associations are used for determination of the task the execution of which is instructed as described later. How these relations and associations are specifically used will be described later.

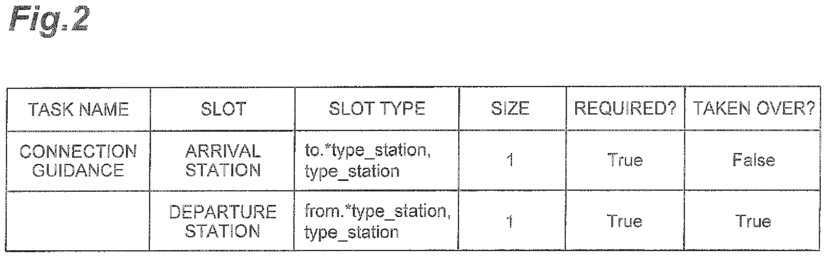

The task the execution of which is instructed involves a function of using a word as an input (argument). This is called a slot of a task. The slot is set in advance. For example, in the case of the task for connection guidance as depicted in Fig. 2, the departure station and the arrival station are used as inputs to the slot to execute the task. In the case of the task for restaurant search, the name of cuisine is used as an input to the slot to search restaurants for cuisine. It should be noted that zero or more slots are defined for each task. In other words, some tasks have no slots.

As depicted in Fig. 2, each slot is associated with pieces of information on "slot type", "size", "required?", "taken over?". The "slot type" is information, for example, for identifying a category (type of a word that a slot can accept) input to a slot, and indicates (contains) information on a category ID, for example. In other words, a slot may be associated with a category of a word. In the example of Fig. 2, "type station" is contained as a slot type for slots corresponding to the arrival station and the departure station, which means that "station" can be input as a category of a word for these slots. The slot type may be a type into which a word can be input when the word is specifically expressed. For example, in the cases of expressions such as "∼ Made (to ∼)" (corresponding to "to.*type_station" for the arrival station in Fig. 2) and "∼ Kara (from -)" (corresponding to "from. *type_station" for the departure station in Fig. 2), words corresponding to the "∼" may be input to the slots. The "slot type" does not have to be a type for identifying a specific category, and may be a type into which words in any category can be input. The "size" indicates the number of words input to each slot. The "required?" indicates whether a word must be input when the task is executed. If no words are input to a slot whose "required?" column contains True, questions may be asked on the slot contents without executing the task to encourage the user to input a word to the slot.

The "taken over?" indicates whether input to the slot is taken over when the task is subsequently executed as described later. With each slot, information may be associated that indicates whether a preset word (default word) is input when no words are input to the slot. For example, in the case of connection guidance, for the departure station, the station name of a station nearest from the current location of the user that is acquired with a global positioning system (GPS), for example, may be input as the default word.

The word input unit 12 is word input means for inputting information containing a word. Specifically, the word input unit 12 receives information indicating one or more words as a result of voice recognition performed by the voice recognition server 20 from the communication terminal 30 to input this information. Alternatively, when the result of voice recognition performed by the voice recognition server 20 is a sentence (input sentence), the word input unit 12 receives the sentence, and extracts words from the sentence or divides the sentence into words to acquire the words. As a method of acquiring the words from the sentence, any conventional methods such as morphological analysis using a morpheme dictionary can be used. The words are input to the word input unit 12 on an utterance-by-utterance basis of the user to the communication terminal 30. In other words, a group of words included in one utterance is dealt with as one unit. The word input unit 12 inputs the information indicating the words acquired to the category identifying unit 13.

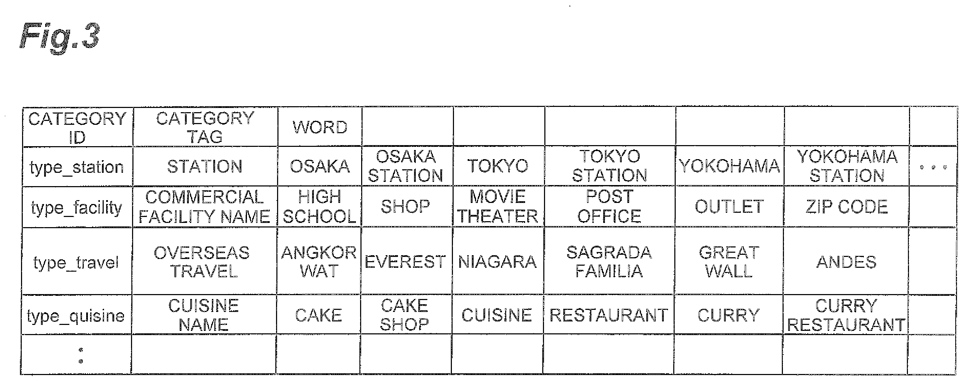

The category identifying unit 13 is category identifying means for identifying a category of a word input by the word input unit 12. Specifically, for example, the category identifying unit 13 stores therein information for identifying categories of words in advance as depicted in Fig. 3, and identifies a category on the basis of the information. This information is input and stored in the function-execution instruction server 10 by an operator, for example, of the function-execution instruction system 1 in advance. In this information, words are associated with category IDs and category tags (category names) that are pieces of information for identifying categories as depicted in Fig. 3. With each category ID and each category tag, one or more words are associated. For example, with the category in which the category ID is "type_station" and the category tag is "station", the words "Osaka", "Osaka Station", "Tokyo", "Tokyo Station", "Yokohama", and "Yokohama Station" are associated.

The category identifying unit 13 determines whether each of the words input by the word input unit 12 is the same as any of the words contained in the information depicted in Fig. 3. If it is the same as any of the words, the category identifying unit 13 determines the category associated with the corresponding word to be a category of the words input by the word input unit 12. Alternatively, the category identifying unit 13 may identify the category by a named entity extraction technique, for example, without using information indicating a corresponding relation between categories and words as depicted in Fig. 3. Alternatively, the category identifying unit 13 may store therein regular expressions and determines whether the word matches any of the regular expressions stored to identify the category. For example, when a word matches a certain regular expression, the word is determined to be of a category that matches the regular expression. Alternatively, the category identifying unit 13 may acquire phone book data stored in the communication terminal 30, and may determine whether the word is a word contained in the phone book data to identify the category. For example, when a word is contained in the phone book data, the word is determined to be of a category of a word existing in the phone book data. The category identifying unit 13 outputs information indicating the word input by the word input unit 12 and the category of the word thus identified to the executed-function determination unit 14. It should be noted that categories do not necessarily have to be identified for all of the words, and categories of some words may be left unidentified.

The executed-function determination unit 14 is executed-function determination means for determining a task the execution of which is instructed by the function-execution instruction unit 11 on the basis of a category identified by the category identification unit 13. For example, the executed-function determination unit 14 determines the task the execution of which is instructed on the basis of a relation (association) between tasks and categories as described above. Specifically, the executed-function determination unit 14 stores therein scores of categories for each task, and identifies a score of a word input on an utterance-by-utterance basis of the user to determine a task the execution of which is instructed based on the identified score. Scores of the respective categories have been set depending on the degree of relation with each task.

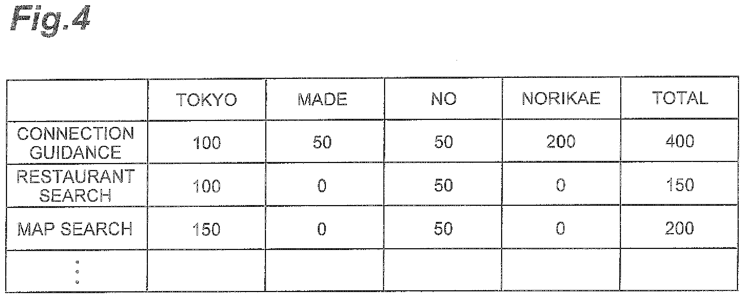

For example, it is assumed that the user utters "Tokyo Made No Norikae (Connections to Tokyo)". In this case, as depicted in Fig. 4, this utterance of the user is divided into words "Tokyo", "Made", "No", and "Norikae". Scores of the categories associated with the respective words are found for each task, and these scores are summed up to calculate a score for each task. Scores for the respective words are identified as depicted in Fig. 4, and these scores are summed up to obtain a summed score for each task (tasks "connection guidance", "restaurant search", and "map search" in the example of Fig. 4). The scores may be set on a word-by-word basis in addition to on a category-by-category basis. For example, because the word "Norikae" is strongly associated with the task of "connection guidance", the score of the word "Norikae" itself is associated with the task of "connection guidance". In this manner, the task the execution of which is instructed may be determined based also on the words input by the word input unit 12 and the preset words.

The executed-function determination unit 14 determines, for example, a task of the highest score as a task the execution of which is instructed by the function-execution instruction unit 11. The executed-function determination unit 14 notifies the function-execution instruction unit 11 of the task thus determined. After this notification, the function-execution instruction unit 11 instructs the communication terminal 30 to execute the task. At this notification, the executed-function determination unit 14 may also notify the function-execution instruction unit 11 of a word that is an input to the slot of the task to be executed (a word the category of which is the same as the category of the slot) out of the words input by the word input unit 12. The word that is an input to the slot is also transmitted from the function-execution instruction unit 11 to the communication terminal 30 together with the instruction to execute the task. For example, when the task of "connection guidance" is executed in response to the utterance of "Tokyo Made No Norikae (Connections to Tokyo)", the word "Tokyo" that falls under the category "station" is used as an input to the slot of the arrival station that is associated with words of the category "station". In this case, to the slot of the departure station, a station name of a station nearest to the current location of the user is input as a default word. This causes connections to be searched from the station nearest to the current location of the user to Tokyo Station, and the result is presented to the user. When the input to the slot is insufficient to execute the task, the user may be encouraged to input to the slot at this time, and may input a word to be input to the slot again.

The executed-function determination unit 14 determines the task the execution of which is instructed by the function-execution instruction unit 11 from now as described above, but alternatively this determination of the task may be based on a task the execution of which was previously instructed by the function-execution instruction unit 11. Specifically, whether to subsequently execute a task the execution of which was previously instructed is determined. For example, when an instruction of the execution of the task of "connection guidance" was previously issued (this task was executed) and then a word based on an utterance of the user is input to the function-execution instruction server 10, whether an instruction of the consecutive execution of the task of "connection guidance" is issued is determined. The following describes a configuration therefor.

The executed-function storage unit 15 is executed-function storage means for storing therein a task the execution of which was instructed by the function-execution instruction unit 11. For example, the executed-function storage unit 15 inputs information (e.g., task name) that indicates a task the execution of which is instructed by the function-execution instruction unit 11, and stores therein the information indicating the task thus input. At this time, the executed-function storage unit 15 may store therein the execution instruction time for the task together. The executed-function storage unit 15 may also input a word that is input to the slot when the function-execution instruction unit 11 issues an instruction of the execution of the task, and may store therein this word together with the executed task. The information stored in the executed-function storage unit 15 is referred to by the executed-function determination unit 14 as described below as necessary.

Based on the category identified by the category identifying unit 13 and the category related to (associated with) a task the execution of which was previously instructed by the function-execution instruction unit 11, the task being stored in the executed-function storage unit 15, the executed-function determination unit 14 determines whether to issue an instruction of the execution of the task the execution of which was previously instructed by the function-execution instruction unit 11 from now. In this case, as the task that is determined whether to be subsequently executed, the task the execution of which was instructed by the function-execution instruction unit 11 immediately before a word is input to the function-execution instruction server 10 (a task the execution of which was instructed at the last time) may be determined whether to be executed. In other words, tasks the execution of which were instructed at and before the second to last time may be excluded from tasks the execution of which is subsequently instructed. Furthermore, only tasks the execution of which were instructed within a certain period of time (e.g., within one hour) set in advance before the input of the word may be candidates for tasks to which an instruction of consecutive execution is issued.

Specifically, the executed-function determination unit 14 determines whether the category related to (associated with) a task the execution of which was previously instructed by the function-execution instruction unit 11, the task being stored in the executed-function storage unit 15, is the same as the category identified by the category identifying unit 13. Based on this determination, the executed-function determination unit 14 determines whether to issue an instruction of the execution of the function the execution of which was previously instructed by the function-execution instruction unit 11. For example, the executed-function determination unit 14 performs the above-described determination by determining whether the category of a word identified by the category identifying unit 13 is the same as the category associated with the slot of the task the execution of which was previously instructed by the function-execution instruction unit 11 (the word identified by the category identifying unit 13 can be input to the slot of the task). If it is determined that the category of a word identified by the category identifying unit 13 is the same as the category associated with the slot of the task the execution of which was previously instructed by the function-execution instruction unit 11, an instruction of the consecutive execution of the task the execution of which was previously instructed is determined to be issued. If it is determined that these categories are not the same, it is determined that an instruction of the consecutive execution of the task is not issued, that is, an instruction of the execution of a new task is issued.

In this case, only when the categories of words identified by the category identification unit 13 are the same as all of the categories associated with the slot of a task the execution of which was previously instructed by the function-execution instruction unit 11, an instruction of the consecutive execution of the task may be issued. Alternatively, when the category of a word identified by the category identification unit 13 is the same as a category associated with part of the slot of the task, an instruction of the consecutive execution of the task may be issued. Alternatively, only when all of the categories of words identified by the category identifying unit 13 are the same as categories associated with any of slots of a task the execution of which was previously instructed by the function-execution instruction unit 11, an instruction of the consecutive execution of the task may be issued (i.e., only when all of the categories of words identified by the category identifying unit 13 are the same as categories associated with any of slots of a task the execution of which was previously instructed by the function-execution unit 11 and also the input sentence contains no noun that is not associated with any of the categories and thus is not associated with any of the slots, an instruction of the consecutive execution of the task may be issued). Alternatively, when a category of a part of words identified by the category identifying unit 13 is the same as any of slots of a task the execution of which was previously instructed by the function-execution instruction unit 11, an instruction of the consecutive execution of the task may be issued. However, when a slot of a task the execution of which was previously instructed by the function-execution instruction unit 11 is not of a type the category of which is identified (when the slot is of a type into which a word of any given category can be input, e.g., the slot of "search word" for the task of "image search"), an instruction of the consecutive execution of the task is likely to be issued even if any category of word is input, and thus the above-described determination may be omitted.

However, even in this case, whether the category of an input word is the same as the category of a word input to the slot of a task the execution of which was previously instructed by the function-execution instruction unit 11 is determined and when these categories are determined to be the same (when the category of a word in an immediately previous utterance is the same as the category of the input word), an instruction of the consecutive execution of the task may be issued. With this configuration, even for a task into the slot of which any given category of word can be input, the task can be appropriately determined to be taken over.

When determining to issue an instruction of the execution of the task (subsequently execute the task) the execution of which was previously instructed by the function-execution instruction unit 11 from now, the executed-function determination unit 14 causes the function-execution instruction unit 11 to issue an instruction of the execution of the task with a word the category of which is the same as the category associated with the slot as an input to the slot. With respect to a part (or all) of slots of a task, the executed-function determination unit 14 may use words that were previously used as inputs to the slots and are stored in the executed-function storage unit 15 as inputs to the task. In this case, in each slot of the task depicted in Fig. 2, only when information in the column "taken over?" indicates that input of a word is taken over (True), input of the word may be taken over. When determining not to take over a previous task on the basis of the above-described determination, the executed-function determination unit 14 determines the instruction to execute a task on the basis of the scores described above.

As in the above-described example, when an instruction of the execution of the task of "connection guidance" is issued in response to the utterance "Tokyo Made No Norikae (Connections to Tokyo)", "connection guidance" is stored in the executed-function storage unit 15 as a task the execution of which was previously instructed, and the word "Tokyo" is stored therein as an input to the slot of the arrival station. It is assumed that the user then utters "Yappari Yokohama (I've changed my mind, Yokohama)". In this case, the word "Yokohama" falls under the category "station", which is determined to be the same as the category associated with the slot of the arrival station in the task of "connection guidance" that was previously executed. Thus, it is determined that an instruction of the consecutive execution of the task of "connection guidance" that was previously executed is issued to execute the task again. At this time, "Yokohama" is input to the slot of the arrival station. As for the departure station, the station name of a station nearest to the current location of the user can be taken over similarly to the case of "Tokyo Made No Norikae (Connections to Tokyo)" (the column of "taken over?" for the departure station indicates True as depicted in Fig. 2).

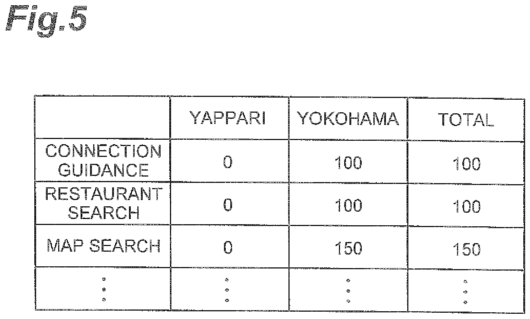

In contrast, a case will be described in which scores are determined based on the utterance "Yappari Yokohama (I've changed my mind, Yokohama)" without determining whether to subsequently issue an instruction to the execution of a previous task by the executed-function determination unit 14 as described above. In this case, as depicted in Fig. 5, the utterance of the user is divided into words "Yappari" and "Yokohama". Similarly to the above-described example, scores of the respective words are then identified for each task, and these scores are summed up to calculate a score for each task. In this case, because the utterance of the user does not contain a word closely related to the "connection guidance", the highest score is obtained not from the "connection guidance" but from the "map search" that scores high merely due to the place name "Yokohama". When the user utters "Tokyo Made No Norikae (Connections to Tokyo)" and the user then utters "Yappari Yokohama (I've changed my mind, Yokohama)", the user is considered to want to know connections to Yokohama Station. When it is determined that a previous task is taken over as described above, an instruction of the execution of the task of "connection guidance" is appropriately issued. In contrast, if a task to be executed is determined independently from the utterance of the user as described above (differently from the present embodiment), the task of "map search" that is not intended by the user will be executed.

It is assumed that the user utters "Curry" after the utterance "Tokyo Made No Norikae (Connections to Tokyo)". In this case, because the word "Curry" falls under the category "cuisine name", which is determined to be not the same as a category associated with the slots of the task of "connection guidance" the execution of which was previously instructed. Thus, the task of "connection guidance" the execution of which was previously instructed is determined not to be subsequently executed again.

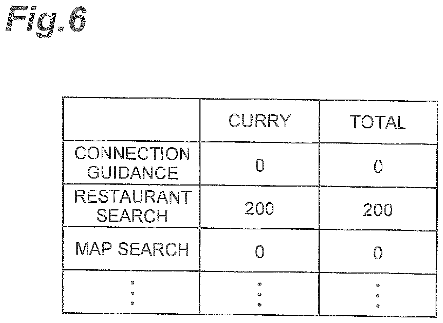

In this case, the executed-function determination unit 14 calculates scores based on the utterance "Curry" to determine a task the execution of which is instructed. As depicted in Fig. 6, the utterance of the user consists of the word "Curry" alone. Scores of categories associated with the respective words for each task are identified similarly to the above-described examples, and these scores are summed up to calculate a score for each task. In this case, the highest score is obtained from the "restaurant search", and accordingly the task of "restaurant search" is determined to be executed. When the user utters "Tokyo Made No Norikae (Connections to Tokyo)" and the user then utters "Curry", because these utterances relate to quite different subjects, the user is considered to want to know information on "Curry" not on "connection guidance". As described above, in this case, the previous task is not determined to be taken over, scores are calculated based on the utterance of the user, and an instruction of the execution of the task of "restaurant search" is issued.

As another example, assuming that a task the execution of which was previously instructed is "restaurant search" on curry and "Tokyo" was input to the slot indicating an area on which the restaurant search is to be conducted, when "Yappari Osaka (I've changed my mind, Osaka)" is input, it is determined that the part "Tokyo" is overwritten with "Osaka" and an instruction of the execution of the "restaurant search" on curry is issued.

Transition of tasks may be optionally performed in a forcible manner in a specific case. For example, when information indicative of causing transition to a new task based on user operation of the communication terminal 30 is received from the communication terminal 30, the task may be forcibly executed (previous task is not taken over).

The determination of a task the execution of which is instructed by the executed-function determination unit 14 may be performed in the following manner. When a task the execution of which is instructed is determined based on an input word group (user's utterance), the foregoing has described that scores are obtained based on words for each task, but scores do not necessarily have to be calculated. For example, tasks are associated with words (categories), whether the words (categories) associated with the tasks are included in a word group input may be determined for each task and, if any word is determined to be included, an instruction of the execution of the corresponding task may be issued.

When it is determined that words or a sentence input contains a keyword having a close relation to a specific task (strong keyword) (when the score results in a significantly large value), a task the execution of which is instructed may be determined based on the words or the sentence newly input without taking over a task the execution of which was previously instructed. In other words, task transition may be forcibly performed. For example, if the word "Norikae (connection)" is contained, the task of "connection guidance" having a close relation is executed.

Even when an instruction of the execution of a new task is issued without taking over a previous task, that is, even when the task transitions, words input to slots may be taken over. In this case, all words that can be taken over are extracted from the slot contents before the transition of the task. In the task after the changeover, the slot contents are all temporarily empty. The above-described extracted words that can be taken over are attempted to be input to (embedded in) the slots of the task after the changeover (a word that cannot be input is abandoned). The input words are input to the slots according to the rule of slot input. The foregoing has described a functional configuration of the function-execution instruction system 1 according to the present embodiment.

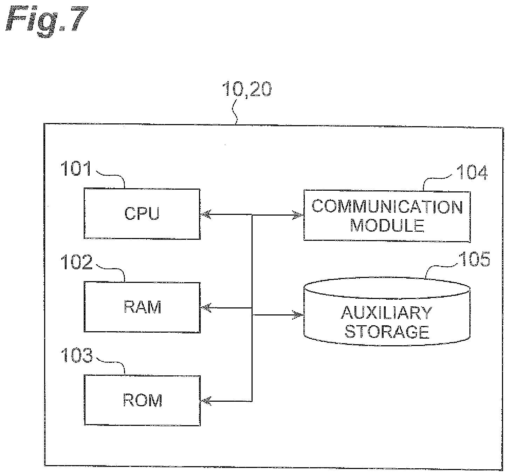

Fig. 7 illustrates a hardware configuration of a server device constituting the function-execution instruction server 10 and the voice recognition server 20 according to the present embodiment. As depicted in Fig. 7, the server device includes a computer provided with hardware such as a central processing unit (CPU) 101, a random access memory (RAM) 102 and a read only memory (ROM) 103 being main memories, a communication module 104 for performing communication, and an auxiliary storage 105 such as a hard disk. These components are operated by a program, for example, whereby functions of the function-execution instruction server 10 and the voice recognition server 20 described above are implemented. The foregoing has described the configuration of the function-execution instruction system 1 according to the present embodiment.

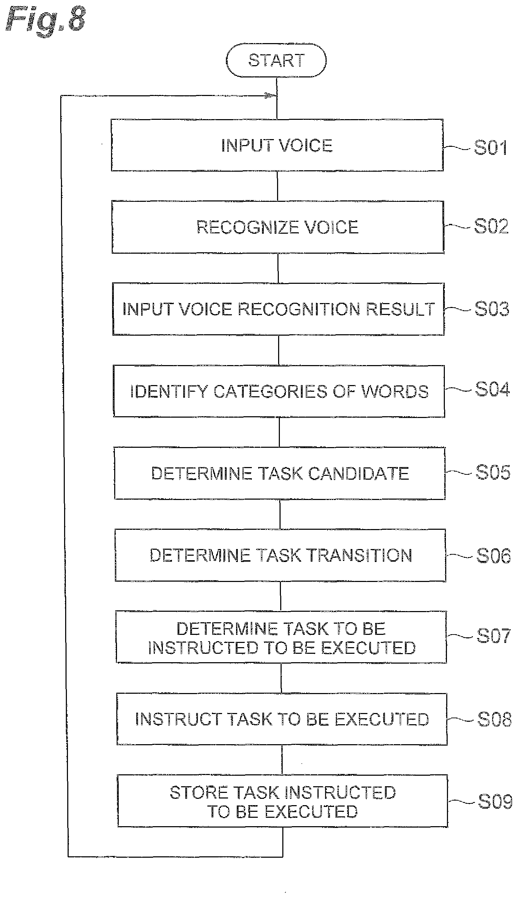

The following describes the function-execution instruction method that is processing executed in the function-execution instruction system 1 according to the present embodiment with reference to the flowchart in Fig. 8. In this processing, to begin with, user operation of the communication terminal 30 is performed to receive an instruction for function execution by the function-execution instruction system 1 according to the present embodiment, and a voice (utterance) of the user to execute a function is input to the communication terminal 30. Subsequently, the voice is transmitted from the communication terminal 30 to the voice recognition server 20. In the voice recognition server 20, the voice is received and input (S01, voice recognition step). Subsequently, the voice recognition server 20 performs voice recognition on the input voice (S02, voice recognition step). Information indicating a group of words or a sentence that is a voice recognition result is transmitted from the voice recognition server 20 to the communication terminal 30. The communication terminal 30 receives the information and transmits the information to the function-execution instruction server 10.

In the function-execution instruction server 10, the word input unit 12 receives and inputs information including the words being the voice recognition result (S03, word input step). The information thus input is output from the word input unit 12 to the category identifying unit 13. Subsequently, the category identifying unit 13 identifies categories of the words included in the information input by the word input unit 12 (S04, category identifying step). The information the categories of which are identified is output together with the words from the category identifying unit 13 to the executed-function determination unit 14.

Subsequently, the executed-function determination unit 14 determines a candidate for a task the execution of which is instructed (S05, executed-function determination step). Determination of this task candidate is performed by calculating scores for each task on the basis of the input words and the categories of the words as described with reference to Figs. 4 to 6. A task obtaining the highest score is determined to be a task candidate to be executed.

Subsequently, based on the categories identified by the category identifying unit 13 and the categories associated with slots of a task the execution of which was previously instructed by the function-execution instruction unit 11, the task being stored in the executed-function storage unit 15, the executed-function determination unit 14 determines whether to issue an instruction of the execution of the task the execution of which was previously instructed by the function-execution instruction unit 11 from now (S06, executed-function determination step). In other words, whether to subsequently issue an instruction of the execution of the task that the execution of which was most recently instructed, or whether to issue an instruction of the execution of a new task (whether to cause the task to transition) is determined. When no instruction of execution of a task was previously issued, or when an instruction of the execution of a task was previously issued but the instruction of the execution of the task was previously issued a certain period ago or earlier and thus is not used for the determination, for example, the above-described determination may be omitted. In this case, a task the execution of which is instructed is determined based on the words input at S03.

If an instruction of the consecutive execution of the task the execution of which was most recently instructed is determined to be issued, this task is determined to be a task the execution of which is instructed (S07, executed-function determination step). If the task is determined to transition, the task determined to be a task candidate at S05 is determined to be a task the execution of which is instructed (S07, executed-function determination step). Subsequently, the executed-function determination unit 14 instructs the function-execution instruction unit 11 to issue an instruction of the execution of the determined task. At this time, the words input to the slots of the task are also output to the function-execution instruction unit 11. Subsequently, the function-execution instruction unit 11 thus instructed instructs the communication terminal 30 to execute the task (S08, function-execution instruction step). The communication terminal 30 receives this instruction and executes the task of the instruction.

Subsequently, the executed-function storage unit 15 stores therein information indicating tasks the execution of which were instructed by the function-execution instruction unit 11 (S09, executed-function storage step). The information indicating the tasks stored herein is referred to when a task the execution of which is instructed is determined (S06) next time a voice of the user instructs a task to be executed. Processing (processes at S01 to S09) of execution (activation) of a task by voice can be repeatedly performed. The foregoing has described the function-execution instruction method that is processing performed in the function-execution instruction system 1 according to the present embodiment.

In the present embodiment as described above, based on the category related to (associated with) a task and the category of an input word, whether to issue an instruction of the execution of the task the execution of which was previously instructed from now is determined. This appropriately determines whether to subsequently execute the task that was previously executed or whether to execute a new task. In other words, according to the present embodiment, execution of functions based on words that are consecutively input can be appropriately performed.

For example, when connections to Tokyo Station are searched by the task of "connection guidance" and then the user utters "Yappari Yokohama (I've changed my mind, Yokohama)" as in the above-described example, the task is taken over and connections to Yokohama Station are searched. In contrast, if the user utters "Curry", the task is not taken over and the task of "restaurant search" is executed. Assuming that tasks are uniformly taken over unlike the present embodiment, when the user utters "Curry", because the "connection guidance" does not correspond to "Curry", the "Curry" will be ignored and connections to Tokyo Station will be searched again against the intention of the user. Assuming that no tasks are taken over unlike the present embodiment, when the user utters "Yappari Yokohama (I've changed my mind, Yokohama)", the task of "map search" will be executed as described above against the intention of the user. As described above, in the present embodiment, taking over of a previous task or task transition is appropriately performed according to the intention of the user, whereby an appropriate task is executed.

Keywords closely related to specific tasks such as "Norikae (connection)" may be set as predetermined words like the present embodiment, and a task to be executed may be determined based on the keywords. With this configuration, for example, based on the words closely related to functions, tasks can be appropriately executed.

As in the above-described example, whether to subsequently execute a task that was most recently executed may be determined. With this configuration, for example, whether to subsequently execute the task that was most recently executed, or whether to execute a new task is appropriately determined, whereby execution of functions based on words that are consecutively input can be appropriately performed. However, only such a task that was most recently executed does not necessarily have to be determined to be taken over, for example, a plurality of tasks that was executed within a certain period of time may be subject to be taken over.

Slots may be provided to a task like the present embodiment so that words input by the word input unit 12 are input to the slots. With this configuration, in addition to the execution of a task, the words that are input by the word input unit 12 can be used as inputs to the task, whereby an appropriate task can be performed, and convenience of the user can be improved. For example, in addition to the execution of the task of "connection guidance" described above, guidance based on an input station name can be performed.

Determination to take over a previous task may be made like the present embodiment by comparing categories (categories of slots) related to (associated with) the task with the category of an input word and determining whether these categories are the same. With this configuration, whether to issue an instruction of the execution of a task the execution of which was previously instructed can be more appropriately determined, whereby the present invention can be more appropriately performed.

Words input to slots may be stored and the stored words may be used as inputs to the slots next time an instruction of the execution of a task is issued. With this configuration, words that were used in a task the execution of which was previously instructed can be used as inputs to a function that is newly executed, whereby convenience of the user can be further improved. For example, in the above-described task of "connection guidance", guidance can be performed with only the arrival station changed.

As in the present embodiment, by receiving voice and performing voice recognition, the result of the voice recognition may be used as information containing input words. With this configuration, functions can be executed based on voices of the user.

Although the present embodiment has described that the function-execution instruction system 1 includes the voice recognition server 20, the function-execution instruction system 1 does not necessarily have to include the voice recognition server 20. In this case, the result of voice recognition, or a word group or a sentence that is not based on the voice recognition is input to the function-execution instruction system 1. Although the present embodiment has described that the function-execution instruction server 10 and the voice recognition server 20 are configured as separate components, these servers may be configured as an integrated component. In this case, the result of voice recognition does not have to be transmitted or received via the communication terminal 30. A terminal used by the user, such as the communication terminal 30, may have the functions of the function-execution instruction server 10 or the voice recognition server 20. In this case, this terminal serves as a function-execution instruction system according to one embodiment of the present invention. Alternatively, the function-execution instruction server 10 may have a function of executing tasks, and may be configured to provide the result of task execution to the communication terminal 30.

In the above-described embodiments, information indicating tasks the execution of which were instructed by the function-execution instruction unit 11 is input and stored in the executed-function storage unit 15. However, the information stored in the executed-function storage unit 15 may be transmitted not from the function-execution instruction unit 11 but from the communication terminal 30, and may be received by the function-execution instruction server 10. In this case, the functions of the executed-function storage unit 15 of the function-execution instruction server 10 as described above are not necessarily required.

In this case, the communication terminal 30 transmits information indicating a task the execution of which was most recently instructed by (the function-execution instruction unit 11 of) the function-execution instruction server 10 (task that was executed or is being executed by this instruction) to the function-execution instruction server 10 together with the result of voice recognition described above. For example, the communication terminal 30 transmits a piece of information of the utterance "Yappari Yokohama (I've changed my mind, Yokohama)" or "Curry" and a piece of information on "connection guidance" indicating a task being executed to the function-execution instruction server 10. The function-execution instruction server 10 receives these pieces of information, and the executed-function determination unit 14 determines a function the execution of which is instructed based on the pieces of information thus received in the same manner as described above. The executed-function determination unit 14 of the function-execution instruction server 10 may receive information stored in the executed-function storage unit 15 (e.g., information input to a slot of a task that was most recently executed) other than the above-described pieces of information from the communication terminal 30, and may use this information to determine a function the execution of which is instructed and issue an instruction of the execution of the function.

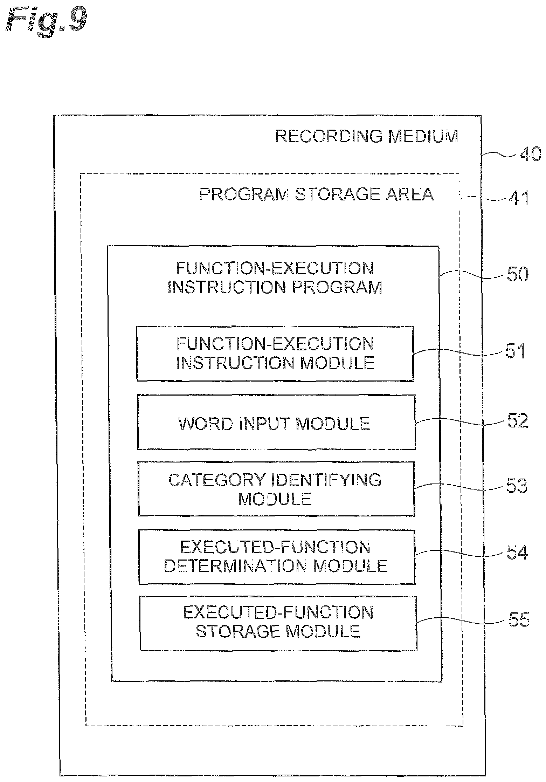

The following describes the function-execution instruction program causing a computer to execute the above-described series of processes performed by the function-execution instruction server 10. As depicted in Fig. 9, this function-execution instruction program 50 is stored in a program storage area 41 formed in a recording medium 40 that is inserted into the computer and accessed or is included in the computer.

The function-execution instruction program 50 includes a function execution module 51, a word input module 52, a category identifying module 53, an executed-function determination module 54, and an executed-function storage module 55. Functions implemented by causing the function execution module 51, the word input module 52, the category identifying module 53, the executed-function determination module 54, and the executed-function storage module 55 to operate are the same as the above-described functions of the function-execution instruction unit 11, the word input unit 12, the category identifying unit 13, the executed-function determination unit 14, and the executed-function storage unit 15 of the function-execution instruction server 10, respectively. The function-execution instruction program 50 may include a module corresponding to the function of the voice recognition server 20.

It should be noted that the function-execution instruction program 50 may be configured so that part or all thereof is transmitted via a transmission medium such as a communication line and is received and recorded (including installation) by another device. Furthermore, the respective modules of the function-execution instruction program 50 may be installed in any of a plurality of computers instead of one computer. In this case, the above-described series of processes of the function-execution instruction program 50 are performed by a computer system including the computers.

### Reference Signs List

1... function-execution instruction system, 10... function-execution instruction server, 11... function-execution instruction unit, 12... word input unit, 13... category identifying unit, 14... executed-function determination unit, 15... executed-function storage unit, 20... voice recognition server, 101... CPU, 102... RAM, 103... ROM, 104... communication module, 105... auxiliary storage, 30... communication terminal, 40... recording medium, 41... program storage area, 50... function-execution instruction program, 51... function execution module, 52... word input module, 53... category identifying module, 54... executed-function determination module, 55... executed-function storage module.

## Claims

1. A function-execution instruction system (1) comprising:
function-execution instruction means (10) for issuing an instruction of execution of one or more functions that are related to preset categories for respective functions;
word input means (12) for inputting information containing a word;
category identifying means (13) for identifying a category of the word contained in the information input by the word input means (12); and
executed-function determination means (14) for determining a function the execution of which is instructed by the function-execution instruction means (10) among the one or more functions, based on the category identified by the category identifying means (13), wherein
the executed-function determination means (14), based on the category identified by the category identifying means (13) and a category related to a function the execution of which was previously instructed by the function-execution instruction means (10), determines whether to issue an instruction of the execution of the function the execution of which was previously instructed by the function-execution instruction means (10) in response to the word contained in the information input by the word input means (12) ;
wherein when the executed-function determination means (14) does determine to not issue the instruction of the execution of the function the execution of which was previously instructed, the executed-function determination means (14) is configured to determine the function the execution of which is instructed based on a score obtained for the word itself, the score being representative of a strength of an association between the word and one of a plurality of predetermined, stored functions; and
**characterized in that** if the executed-function determination means (14) determines that the category of the word identified by the category identifying means (13) is the same as the category associated with the argument of the function the execution of which was previously instructed by the function-execution instruction means (11), an instruction of the consecutive execution of the function the execution of which was previously instructed is determined to be issued and if the executed-function determination means (14) determines that these categories are not the same, the executed-function determination means (14) determines that an instruction of the consecutive execution of the function is not issued, that is, an instruction of the execution of a new function is issued.

2. The function-execution instruction system (1) according to claim 1, further comprising executed-function storage means (15) for storing therein a function the execution of which was instructed by the function-execution instruction means (10), wherein
the executed-function determination means (14), based on the category identified by the category identifying means (13) and a category related to a function the execution of which was previously instructed by the function-execution instruction means (10), the function being stored in the executed-function storage means (15), determines whether to issue an instruction of the execution of the function the execution of which was previously instructed by the function-execution instruction means (10).

3. The function-execution instruction system (1) according to claim 1 or 2, wherein
a preset word is associated with at least any of the one or more functions, and
the executed-function determination means (14) determines a function the execution of which is instructed by the function-execution instruction means (10) among the one or more functions, based also on a word input by the word input means (12) and the preset word.

4. The function-execution instruction system (1) according to any one of claims 1 to 3, wherein
the executed-function determination means (14), based on a category identified by the category identifying means (13), determines whether to issue an instruction of the execution of the function the execution of which was instructed by the function-execution instruction means (10) immediately before a word that falls under the category is input by the word input means (12).

5. The function-execution instruction system according to any one of claims 1 to 4, wherein
the function the execution of which is instructed by the function-execution instruction means (10) includes a function of inputting a word, the word being contained in information input by the word input means (12) and fall under the category related to the function, and
the executed-function determination means (14) determines whether the word the category of which is identified by the category identifying means (13) is capable of being input to a function the execution of which was previously instructed by the function-execution instruction means (10) and, based on this determination, determines whether to issue an instruction of the execution of the function the execution of which was previously instructed by the function-execution instruction means (10).

6. The function-execution instruction system (1) according to claim 5, wherein
the executed-function determination means (14), when determining to issue an instruction of the execution of the function the execution of which was previously instructed by the function-execution instruction means (10) from now, uses a word that was used as an input to the function the execution of which was previously instructed by the function-execution instruction means (10) as an input to the function.

7. The function-execution instruction system (1) according to claim 6, wherein
the executed-function determination means (14) determines whether the category identified by the category identifying means (13) is the same as the category of the word that was used as an input to the function the execution of which was previously instructed and, when determining that the categories are the same, determines to issue an instruction of the execution of the function the execution of which was previously instructed.

8. The function-execution instruction system (1) according to any one of claims 1 to 7, further comprising a voice recognition means (20) that receives a voice, performs voice recognition on the voice thus received, and inputs a result of the voice recognition thus performed to the word input means (12).

9. A function-execution instruction method comprising:
a function-execution instruction step (S08) of issuing an instruction of execution of one or more functions that are related to preset categories for respective functions;
a word input step (S03) of inputting information containing a word;
a category identifying step (S04) of identifying a category of the word contained in the information input at the word input step (S03); and
an executed-function determination step (S07) of determining a function the execution of which is instructed at the function-execution instruction step among the one or more functions, based on the category identified at the category identifying step, wherein
at the executed-function determination step (S07), based on the category identified at the category identifying step and a category related to a function the execution of which was previously instructed at the function-execution instruction step (S08), whether to issue an instruction of the execution of the function the execution of which was previously instructed at the function-execution instruction step in response to the word contained in the information input by the word input means is determined;
wherein when the executed-function determination step (S07) does determine to not issue the instruction of the execution of the function the execution of which was previously instructed, the executed-function determination step (S07) determines the function the execution of which is instructed based on a score obtained for the word itself, the score being representative of a strength of an association between the word and one of a plurality of predetermined, stored functions; and
**characterized in that** if the executed-function determination step (S07) determines that the category of the word identified by the category identifying means (13) is the same as the category associated with the argument of the function the execution of which was previously instructed by the function-execution instruction means (11), an instruction of the consecutive execution of the function the execution of which was previously instructed is determined to be issued and if the executed-function determination means (14) determines that these categories are not the same, the executed-function determination step (S07) determines that an instruction of the consecutive execution of the function is not issued, that is, an instruction of the execution of a new function is issued.

10. A function-execution instruction program (50) causing a computer to function as:
function-execution instruction means (10) for issuing an instruction of execution of one or more functions that are related to preset categories for respective functions;
word input means (12) for inputting information containing a word;
category identifying means (13) for identifying a category of the word contained in the information input by the word input means (12); and
executed-function determination means (14) for determining a function the execution of which is instructed by the function-execution instruction means (10) among the one or more functions, based on the category identified by the category identifying means (13), wherein
the executed-function determination means (14), based on the category identified by the category identifying means (13) and a category related to a function the execution of which was previously instructed by the function-execution instruction means (10), determines whether to issue an instruction of the execution of the function the execution of which was previously instructed by the function-execution instruction means (10) in response to the word contained in the information input by the word input means (12);
wherein when the executed-function determination means (14) does determine to not issue the instruction of the execution of the function the execution of which was previously instructed, the executed-function determination means (14) is configured to determine the function the execution of which is instructed based on a score obtained for the word itself, the score being representative of a strength of an association between the word and one of a plurality of predetermined, stored functions; and
**characterized in that** if the executed-function determination means (14) determines that the category of the word identified by the category identifying means (13) is the same as the category associated with the argument of the function the execution of which was previously instructed by the function-execution instruction means (11), an instruction of the consecutive execution of the function the execution of which was previously instructed is determined to be issued and if the executed-function determination means (14) determines that these categories are not the same, the executed-function determination means (14) determines that an instruction of the consecutive execution of the function is not issued, that is, an instruction of the execution of a new function is issued.

## Patentansprüche

1. Ein Funktionsausführung-Instruktionssystem (1), aufweisend:
ein Funktionsausführung-Instruktionsmittel (10) zum Erteilen einer Instruktion zur Ausführung einer oder mehrerer Funktionen, die sich auf voreingestellte Kategorien für entsprechende Funktionen beziehen;
ein Wort-Eingabemittel (12) zum Eingeben von Informationen, die ein Wort enthalten;
ein Kategorie-Identifizierungsmittel (13) zum Identifizieren einer Kategorie des Wortes, welches in den von dem Wort-Eingabemittel (12) eingegebenen Informationen enthalten ist; und
ein Ausgeführte-Funktion-Ermittlungsmittel (14) zum Ermitteln einer Funktion, deren Ausführung durch das Funktionsausführung-Instruktionsmittel (10) angewiesen wird, unter der einen oder den mehreren Funktionen, basierend auf der durch das Kategorie-Identifizierungsmittel (13) identifizierten Kategorie, wobei
das Ausgeführte-Funktion-Ermittlungsmittel (14), basierend auf der durch das Kategorie-Identifizierungsmittel (13) identifizierten Kategorie und einer Kategorie, die sich auf eine Funktion bezieht, deren Ausführung zuvor von dem Funktionsausführung-Instruktionsmittel (10) angewiesen wurde, ermittelt, ob eine Instruktion zur Ausführung der Funktion, deren Ausführung zuvor von dem Funktionsausführung-Instruktionsmittel (10) angewiesen wurde, erteilt wird, als Antwort auf das Wort, welches in den von dem Wort-Eingabemittel (12) eingegebenen Informationen enthalten ist;
wobei, wenn das Ausgeführte-Funktion-Ermittlungsmittel (14) ermittelt, die Instruktion zur Ausführung der Funktion, deren Ausführung zuvor angewiesen wurde, nicht zu erteilen, das Ausgeführte-Funktion-Ermittlungsmittel (14) konfiguriert ist, um die Funktion, deren Ausführung angewiesen wird, basierend auf einem Wert zu ermitteln, der für das Wort selbst erhalten wird, wobei der Wert repräsentativ für eine Stärke einer Assoziation zwischen dem Wort und einer aus einer Mehrzahl vorbestimmter, gespeicherter Funktionen ist; und
**dadurch gekennzeichnet, dass**, wenn das Ausgeführte-Funktion-Ermittlungsmittel (14) ermittelt, dass die von dem Kategorie-Identifizierungsmittel (13) identifizierte Kategorie des Wortes die gleiche ist wie die Kategorie, welche mit dem Argument der Funktion, deren Ausführung zuvor von dem Funktionsausführung-Instruktionsmittel (11) angewiesen wurde, assoziiert ist, ermittelt wird, dass eine Instruktion der aufeinanderfolgenden Ausführung der Funktion, deren Ausführung zuvor angewiesen wurde, angewiesen werden soll, und wenn das Ausgeführte-Funktion-Ermittlungsmittel (14) ermittelt, dass diese Kategorien nicht übereinstimmen, das Ausgeführte-Funktion-Ermittlungsmittel (14) ermittelt, dass eine Instruktion der aufeinanderfolgenden Ausführung der Funktion nicht angewiesen wird, das heißt, eine Instruktion zur Ausführung einer neuen Funktion erteilt wird.

2. Das Funktionsausführung-Instruktionssystem (1) gemäß Anspruch 1, ferner aufweisend ein Ausgeführte-Funktion-Speichermittel (15), um darin eine Funktion zu speichern, deren Ausführung von dem Funktionsausführung-Instruktionsmittel (10) angewiesen wurde, wobei
das Ausgeführte-Funktion-Ermittlungsmittel (14), basierend auf der von dem Kategorie-Identifizierungsmittel (13) identifizierten Kategorie und einer Kategorie, die sich auf eine Funktion bezieht, deren Ausführung zuvor von dem Funktionsausführung-Instruktionsmittel (10) angewiesen wurde, wobei die Funktion in dem Ausgeführte-Funktion-Speichermittel (15) gespeichert ist, ermittelt, ob eine Instruktion zur Ausführung der Funktion, deren Ausführung zuvor von dem Funktionsausführung-Instruktionsmittel (10) angewiesen wurde, erteilt wird.

3. Das Funktionsausführung-Instruktionssystem (1) gemäß Anspruch 1 oder 2, wobei
ein vorbestimmtes Wort mit mindestens irgendeiner der einen oder der mehreren Funktionen assoziiert ist, und
das Ausgeführte-Funktion-Ermittlungsmittel (14) eine Funktion ermittelt, deren Ausführung von dem Funktionsausführung-Instruktionsmittel (10) angewiesen wird, unter der einen oder den mehreren Funktionen, basierend auch auf einem von dem Wort-Eingabemittel (12) eingegebenen Wort und dem vorbestimmten Wort.

4. Das Funktionsausführung-Instruktionssystem (1) gemäß irgendeinem der Ansprüche 1 bis 3, wobei
das Ausgeführte-Funktion-Ermittlungsmittel (14), basierend auf einer von dem Kategorie-Identifizierungsmittel (13) identifizierten Kategorie, ermittelt, ob eine Instruktion zur Ausführung der Funktion, deren Ausführung von dem Funktionsausführung-Instruktionsmittel (10) angewiesen wurde, unmittelbar bevor ein in die Kategorie fallendes Wort von dem Wort-Eingabemittel (12) eingegeben wird, erteilt wird.

5. Das Funktionsausführung-Instruktionssystem gemäß irgendeinem der Ansprüche 1 bis 4, wobei
die Funktion, deren Ausführung von dem Funktionsausführung-Instruktionsmittel (10) angewiesen wird, eine Funktion zum Eingeben eines Wortes aufweist, wobei das Wort in von dem Wort-Eingabemittel (12) eingegebenen Informationen enthalten ist und in die Kategorie fällt, die sich auf die Funktion bezieht, und
das Ausgeführte-Funktion-Ermittlungsmittel (14) ermittelt, ob das Wort, dessen Kategorie von dem Kategorie-Identifizierungsmittel (13) identifiziert wird, geeignet ist, an eine Funktion eingegeben zu werden, deren Ausführung zuvor von dem Funktionsausführung-Instruktionsmittel (10) angewiesen wurde, und, basierend auf dieser Ermittlung ermittelt, ob eine Instruktion zur Ausführung der Funktion, deren Ausführung zuvor von dem Funktionsausführung-Instruktionsmittel (10) angewiesen wurde, erteilt wird.

6. Das Funktionsausführung-Instruktionssystem (1) gemäß Anspruch 5, wobei
das Ausgeführte-Funktion-Ermittlungsmittel (14), wenn es ermittelt eine Instruktion zur Ausführung der Funktion, deren Ausführung zuvor von dem Funktionsausführung-Instruktionsmittel (10) angewiesen wurde, zu erteilen, ab jetzt als eine Eingabe an die Funktion ein Wort verwendet, das als eine Eingabe an die Funktion, deren Ausführung zuvor von dem Funktionsausführung-Instruktionsmittel (10) angewiesen wurde, verwendet wurde.

7. Das Funktionsausführung-Instruktionssystem (1) gemäß Anspruch 6, wobei
das Ausgeführte-Funktion-Ermittlungsmittel (14) ermittelt, ob die von dem Kategorie-Identifizierungsmittel (13) identifizierte Kategorie die gleiche Kategorie ist wie die Kategorie des Wortes, welches als eine Eingabe an die Funktion, deren Ausführung zuvor angewiesen wurde, verwendet wurde, und, wenn es ermittelt, dass die Kategorien übereinstimmen, ermittelt wird eine Instruktion zur Ausführung der Funktion, deren Ausführung zuvor angewiesen wurde, zu erteilen.

8. Das Funktionsausführung-Instruktionssystem (1) gemäß irgendeinem der Ansprüche 1 bis 7, ferner aufweisend ein Stimmerkennungsmittel (20), welches eine Stimme empfängt, die so empfangene Stimme einer Stimmerkennung unterzieht und ein Ergebnis der so durchgeführten Stimmerkennung an das Wort-Eingabemittel (12) eingibt.

9. Ein Funktionsausführung-Instruktionsverfahren, aufweisend:
einen Funktionsausführung-Instruktionsschritt (So8) des Erteilens einer Instruktion zur Ausführung einer oder mehrerer Funktionen, die sich auf voreingestellte Kategorien für entsprechende Funktionen beziehen;
einen Wort-Eingabeschritt (So3) des Eingebens von Informationen, die ein Wort enthalten;
einen Kategorie-Identifizierungsschritt (So4) des Identifizierens einer Kategorie des Wortes, das in den Informationen, die in dem Wort-Eingabeschritt (So3) eingegeben werden, enthalten ist; und
einen Ausgeführte-Funktion-Ermittlungsschritt (So7) des Ermittelns einer Funktion, deren Ausführung in dem Funktionsausführung-Instruktionsschritt angewiesen wird, unter der einen oder den mehreren Funktionen, basierend auf der in dem Kategorie-Identifizierungsschritt identifizierten Kategorie, wobei
in dem Ausgeführte-Funktion-Ermittlungsschritt (So7), basierend auf der in dem Kategorie-Identifizierungsschritt identifizierten Kategorie und einer Kategorie, die sich auf eine Funktion bezieht, deren Ausführung zuvor in dem Funktionsausführung-Instruktionsschritt (So8) angewiesen wurde, ermittelt wird, ob eine Instruktion zur Ausführung der Funktion, deren Ausführung zuvor in dem Funktionsausführung-Instruktionsschritt angewiesen wurde, als Antwort auf das Wort, das in den von dem Wort-Eingabemittel eingegeben Informationen enthalten ist, erteilt wird;
wobei, wenn der Ausgeführte-Funktion-Ermittlungsschritt (So7) ermittelt, die Instruktion zur Ausführung der Funktion, deren Ausführung zuvor angewiesen wurde, nicht zu erteilen, der Ausgeführte-Funktion-Ermittlungsschritt (So7) die Funktion, deren Ausführung angewiesen wird basierend auf einem Wert ermittelt, der für das Wort selbst erhalten wird, wobei der Wert repräsentativ für eine Stärke einer Assoziation zwischen dem Wort und einer aus einer Mehrzahl von vorbestimmten, gespeicherten Funktionen ist; und
**dadurch gekennzeichnet, dass**, wenn der Ausgeführte-Funktion-Ermittlungsschritt (So7) ermittelt, dass die von dem Kategorie-Identifizierungsmittel (13) identifizierte Kategorie des Wortes die gleiche ist wie die Kategorie, die mit dem Argument der Funktion, deren Ausführung zuvor von dem Funktionsausführung-Instruktionsmittel (11) angewiesen wurde, assoziiert ist, ermittelt wird, dass eine Instruktion der aufeinanderfolgenden Ausführung der Funktion, deren Ausführung zuvor angewiesen wurde, angewiesen werden soll, und wenn das Ausgeführte-Funktion-Ermittlungsmittel (14) ermittelt, dass diese Kategorien nicht übereinstimmen, der Ausgeführte-Funktion-Ermittlungsschritt (So7) ermittelt, dass eine Instruktion der aufeinanderfolgenden Ausführung der Funktion nicht angewiesen wird, das heißt, eine Instruktion zur Ausführung einer neuen Funktion erteilt wird.

10. Ein Funktionsausführung-Instruktionsprogramm (50), das bewirkt, dass ein Computer funktioniert als:
ein Funktionsausführung-Instruktionsmittel (10) zum Erteilen einer Instruktion zur Ausführung einer oder mehrerer Funktionen, die sich auf voreingestellte Kategorien für entsprechende Funktionen beziehen;
ein Wort-Eingabemittel (12) zum Eingeben von Informationen, die ein Wort beinhalten;
ein Kategorie-Identifizierungsmittel (13) zum Identifizieren einer Kategorie des Wortes, welches in den von dem Wort-Eingabemittel (12) eingegebenen Informationen enthalten ist; und
ein Ausgeführte-Funktion-Ermittlungsmittel (14) zum Ermitteln einer Funktion, deren Ausführung durch das Funktionsausführung-Instruktionsmittel (10) angewiesen wird, unter der einen oder den mehreren Funktionen, basierend auf der durch das Kategorie-Identifizierungsmittel (13) identifizierten Kategorie, wobei
das Ausgeführte-Funktion-Ermittlungsmittel (14), basierend auf der durch das Kategorie-Identifizierungsmittel (13) identifizierten Kategorie und einer Kategorie, die sich auf eine Funktion bezieht, deren Ausführung zuvor von dem Funktionsausführung-Instruktionsmittel (10) angewiesen wurde, ermittelt, ob eine Instruktion zur Ausführung der Funktion, deren Ausführung zuvor von dem Funktionsausführung-Instruktionsmittel (10) angewiesen wurde, erteilt wird, als Antwort auf das Wort, welches in den von dem Wort-Eingabemittel (12) eingegebenen Informationen enthalten ist;
wobei, wenn das Ausgeführte-Funktion-Ermittlungsmittel (14) ermittelt, die Instruktion zur Ausführung der Funktion, deren Ausführung zuvor angewiesen wurde, nicht zu erteilen, das Ausgeführte-Funktion-Ermittlungsmittel (14) konfiguriert ist, um die Funktion, deren Ausführung angewiesen wird, basierend auf einem Wert zu ermitteln, der für das Wort selbst erhalten wird, wobei der Wert repräsentativ für eine Stärke einer Assoziation zwischen dem Wort und einer aus einer Mehrzahl vorbestimmter, gespeicherter Funktionen ist; und
**dadurch gekennzeichnet, dass**, wenn das Ausgeführte-Funktion-Ermittlungsmittel (14) ermittelt, dass die von dem Kategorie-Identifizierungsmittel (13) identifizierte Kategorie des Wortes die gleiche ist wie die Kategorie, welche mit dem Argument der Funktion, deren Ausführung zuvor von dem Funktionsausführung-Instruktionsmittel (11) angewiesen wurde, assoziiert ist, ermittelt wird, dass eine Instruktion der aufeinanderfolgenden Ausführung der Funktion, deren Ausführung zuvor angewiesen wurde, angewiesen werden soll, und wenn das Ausgeführte-Funktion-Ermittlungsmittel (14) ermittelt, dass diese Kategorien nicht übereinstimmen, das Ausgeführte-Funktion-Ermittlungsmittel (14) ermittelt, dass eine Instruktion der aufeinanderfolgenden Ausführung der Funktion nicht angewiesen wird, das heißt, eine Instruktion zur Ausführung einer neuen Funktion erteilt wird.

## Revendications

1. Système d'instruction d'exécution de fonction (1) comprenant :
un moyen d'instruction d'exécution de fonction (10) pour émettre une instruction d'exécution d'une ou de plusieurs fonctions qui sont connexes à des catégories prédéfinies pour des fonctions respectives ;
un moyen d'entrée de mot (12) pour entrer des informations contenant un mot ;
un moyen d'identification de catégorie (13) pour identifier une catégorie du mot contenu dans les informations entrées par le moyen d'entrée de mot (12) ; et
un moyen de détermination de fonction exécutée (14) pour déterminer une fonction dont l'exécution est ordonnée par le moyen d'instruction d'exécution de fonction (10) parmi ladite une ou lesdites plusieurs fonctions, sur la base de la catégorie identifiée par le moyen d'identification de catégorie (13), dans lequel
le moyen de détermination de fonction exécutée (14), sur la base de la catégorie identifiée par le moyen d'identification de catégorie (13) et d'une catégorie connexe à une fonction dont l'exécution a été précédemment ordonnée par le moyen d'instruction d'exécution de fonction (10), détermine s'il convient d'émettre une instruction de l'exécution de la fonction dont l'exécution a été précédemment ordonnée par le moyen d'instruction d'exécution de fonction (10) en réponse au mot contenu dans les informations entrées par le moyen d'entrée de mot (12) ;
dans lequel, lorsque le moyen de détermination de fonction exécutée (14) détermine qu'il convient de ne pas émettre l'instruction d'exécution de la fonction dont l'exécution a été précédemment ordonnée, le moyen de détermination de fonction exécutée (14) est configuré de manière à déterminer la fonction dont l'exécution est ordonnée sur la base d'un score obtenu pour le mot lui-même, le score étant représentatif d'une intensité d'une association entre le mot et une fonction parmi une pluralité de fonctions stockées prédéterminées ; et
**caractérisé en ce que**, si le moyen de détermination de fonction exécutée (14) détermine que la catégorie du mot identifiée par le moyen d'identification de catégorie (13) est la même que la catégorie associée à l'argument de la fonction dont l'exécution a été précédemment ordonnée par le moyen d'instruction d'exécution de fonction (11), une instruction de l'exécution consécutive de la fonction dont l'exécution a été précédemment ordonnée est déterminée comme étant émise, et si le moyen de détermination de fonction exécutée (14) détermine que ces catégories ne sont pas les mêmes, le moyen de détermination de fonction exécutée (14) détermine qu'une instruction de l'exécution consécutive de la fonction n'est pas émise, à savoir, une instruction de l'exécution d'une nouvelle fonction est émise.

2. Système d'instruction d'exécution de fonction (1) selon la revendication 1, comprenant en outre un moyen de stockage de fonction exécutée (15) destiné à stocker une fonction dont l'exécution a été instruite par le moyen d'instruction d'exécution de fonction (10), dans lequel :
le moyen de détermination de fonction exécutée (14), sur la base de la catégorie identifiée par le moyen d'identification de catégorie (13) et d'une catégorie connexe à une fonction dont l'exécution a été précédemment ordonnée par le moyen d'instruction d'exécution de fonction (10), la fonction étant stockée dans le moyen de stockage de fonction exécutée (15), détermine s'il convient d'émettre une instruction de l'exécution de la fonction dont l'exécution a été précédemment ordonnée par le moyen d'instruction d'exécution de fonction (10).

3. Système d'instruction d'exécution de fonction (1) selon la revendication 1 ou 2, dans lequel :
un mot prédéfini est associé à au moins l'une quelconque parmi ladite une ou lesdites plusieurs fonctions ; et
le moyen de détermination de fonction exécutée (14) détermine une fonction dont l'exécution est ordonnée par le moyen d'instruction d'exécution de fonction (10) parmi ladite une ou lesdites plusieurs fonctions, sur la base également d'un mot entré par le moyen d'entrée de mot (12) et du mot prédéfini.

4. Système d'instruction d'exécution de fonction (1) selon l'une quelconque des revendications 1 à 3, dans lequel :
le moyen de détermination de fonction exécutée (14), sur la base d'une catégorie identifiée par le moyen d'identification de catégorie (13), détermine s'il convient d'émettre une instruction de l'exécution de la fonction dont l'exécution a été ordonnée par le moyen d'instruction d'exécution de fonction (10) immédiatement avant qu'un mot qui appartient à la catégorie soit entré par le moyen d'entrée de mot (12).

5. Système d'instruction d'exécution de fonction selon l'une quelconque des revendications 1 à 4, dans lequel :
la fonction dont l'exécution est ordonnée par le moyen d'instruction d'exécution de fonction (10) inclut une fonction d'entrée d'un mot, le mot étant contenu dans des informations entrées par le moyen d'entrée de mot (12) et appartenant à la catégorie connexe à la fonction ; et
le moyen de détermination de fonction exécutée (14) détermine si le mot dont la catégorie est identifiée par le moyen d'identification de catégorie (13) est susceptible d'être entré dans une fonction dont l'exécution a été précédemment ordonnée par le moyen d'instruction d'exécution de fonction (10) et, sur la base de cette détermination, détermine s'il convient d'émettre une instruction de l'exécution de la fonction dont l'exécution a été précédemment ordonnée par le moyen d'instruction d'exécution de fonction (10).

6. Système d'instruction d'exécution de fonction (1) selon la revendication 5, dans lequel :
le moyen de détermination de fonction exécutée (14), lorsqu'il détermine qu'il convient d'émettre une instruction de l'exécution de la fonction dont l'exécution a été précédemment ordonnée par le moyen d'instruction d'exécution de fonction (10), utilise désormais un mot qui a été utilisé en tant qu'une entrée dans la fonction dont l'exécution a été précédemment ordonnée par le moyen d'instruction d'exécution de fonction (10) en tant qu'une entrée dans la fonction.

7. Système d'instruction d'exécution de fonction (1) selon la revendication 6, dans lequel :
le moyen de détermination de fonction exécutée (14) détermine si la catégorie identifiée par le moyen d'identification de catégorie (13) est la même que la catégorie du mot qui a été utilisé en tant qu'entrée dans la fonction dont l'exécution a été précédemment ordonnée et, lorsqu'il détermine que les catégories sont les mêmes, détermine qu'il convient d'émettre une instruction de l'exécution de la fonction dont l'exécution a été précédemment ordonnée.

8. Système d'instruction d'exécution de fonction (1) selon l'une quelconque des revendications 1 à 7, comprenant en outre un moyen de reconnaissance vocale (20) qui reçoit un contenu vocal, met en oeuvre une reconnaissance vocale sur le contenu vocal ainsi reçu, et entre un résultat de la reconnaissance vocale ainsi mise en oeuvre dans le moyen d'entrée de mot (12).

9. Procédé d'instruction d'exécution de fonction comprenant :
une étape d'instruction d'exécution de fonction (S08) consistant à émettre une instruction d'exécution d'une ou de plusieurs fonctions qui sont connexes à des catégories prédéfinies pour des fonctions respectives ;
une étape d'entrée de mot (S03) consistant à entrer des informations contenant un mot ;
une étape d'identification de catégorie (S04) consistant à identifier une catégorie du mot contenu dans les informations entrées à l'étape d'entrée de mot (S03) ; et
une étape de détermination de fonction exécutée (S07) consistant à déterminer une fonction dont l'exécution est ordonnée à l'étape d'instruction d'exécution de fonction parmi ladite une ou lesdites plusieurs fonctions, sur la base de la catégorie identifiée à l'étape d'identification de catégorie, dans lequel :
à l'étape de détermination de fonction exécutée (S07), sur la base de la catégorie identifiée à l'étape d'identification de catégorie et d'une catégorie connexe à une fonction dont l'exécution a été précédemment ordonnée à l'étape d'instruction d'exécution de fonction (S08), il est déterminé s'il convient d'émettre une instruction de l'exécution de la fonction dont l'exécution a été précédemment ordonnée à l'étape d'instruction d'exécution de fonction en réponse au mot contenu dans les informations entrées par le moyen d'entrée de mot ;
dans lequel, lorsque l'étape de détermination de fonction exécutée (S07) détermine qu'il convient de ne pas émettre l'instruction de l'exécution de la fonction dont l'exécution a été précédemment ordonnée, l'étape de détermination de fonction exécutée (S07) détermine la fonction dont l'exécution est ordonnée sur la base d'un score obtenu pour le mot lui-même, le score étant représentatif d'une intensité d'une association entre le mot et une fonction parmi une pluralité de fonctions stockées prédéterminées ; et
**caractérisé en ce que**, si l'étape de détermination de fonction exécutée (S07) détermine que la catégorie du mot identifiée par le moyen d'identification de catégorie (13) est la même que la catégorie associée à l'argument de la fonction dont l'exécution a été précédemment ordonnée par le moyen d'instruction d'exécution de fonction (11), une instruction de l'exécution consécutive de la fonction dont l'exécution a été précédemment ordonnée est déterminée comme étant émise, et si le moyen de détermination de fonction exécutée (14) détermine que ces catégories ne sont pas les mêmes, l'étape de détermination de fonction exécutée (S07) détermine qu'une instruction de l'exécution consécutive de la fonction n'est pas émise, à savoir, une instruction de l'exécution d'une nouvelle fonction est émise.

10. Programme d'instruction d'exécution de fonction (50) amenant un ordinateur à fonctionner en tant que :
moyen d'instruction d'exécution de fonction (10) pour émettre une instruction d'exécution d'une ou de plusieurs fonctions qui sont connexes à des catégories prédéfinies pour des fonctions respectives ;
moyen d'entrée de mot (12) pour entrer des informations contenant un mot ;
moyen d'identification de catégorie (13) pour identifier une catégorie du mot contenu dans les informations entrées par le moyen d'entrée de mot (12) ; et
moyen de détermination de fonction exécutée (14) pour déterminer une fonction dont l'exécution est ordonnée par le moyen d'instruction d'exécution de fonction (10) parmi ladite une ou lesdites plusieurs fonctions, sur la base de la catégorie identifiée par le moyen d'identification de catégorie (13), dans lequel :
le moyen de détermination de fonction exécutée (14), sur la base de la catégorie identifiée par le moyen d'identification de catégorie (13) et d'une catégorie connexe à une fonction dont l'exécution a été précédemment ordonnée par le moyen d'instruction d'exécution de fonction (10), détermine s'il convient d'émettre une instruction de l'exécution de la fonction dont l'exécution a été précédemment ordonnée par le moyen d'instruction d'exécution de fonction (10) en réponse au mot contenu dans les informations entrées par le moyen d'entrée de mot (12) ;
dans lequel, lorsque le moyen de détermination de fonction exécutée (14) détermine qu'il convient de ne pas émettre l'instruction de l'exécution de la fonction dont l'exécution a été précédemment ordonnée, le moyen de détermination de fonction exécutée (14) est configuré de manière à déterminer la fonction dont l'exécution est ordonnée sur la base d'un score obtenu pour le mot lui-même, le score étant représentatif d'une intensité d'une association entre le mot et une fonction parmi une pluralité de fonctions stockées prédéterminées ; et
**caractérisé en ce que**, si le moyen de détermination de fonction exécutée (14) détermine que la catégorie du mot identifiée par le moyen d'identification de catégorie (13) est la même que la catégorie associée à l'argument de la fonction dont l'exécution a été précédemment ordonnée par le moyen d'instruction d'exécution de fonction (11), une instruction de l'exécution consécutive de la fonction dont l'exécution a été précédemment ordonnée est déterminée comme étant émise, et si le moyen de détermination de fonction exécutée (14) détermine que ces catégories ne sont pas les mêmes, le moyen de détermination de fonction exécutée (14) détermine qu'une instruction de l'exécution consécutive de la fonction n'est pas émise, à savoir, une instruction de l'exécution d'une nouvelle fonction est émise.
